(19) Europäisches Patentamt
European Patent Office
Office européen des brevets

(11) **EP 1 597 336 B1**

(12) **FASCICULE DE BREVET EUROPEEN**

(45) Date de publication et mention
de la délivrance du brevet:
**17.10.2012 Bulletin 2012/42**

(21) Numéro de dépôt: **04712087.8**

(22) Date de dépôt: **18.02.2004**

(51) Int Cl.:
*C08B 31/00* (2006.01)    *C09K 8/08* (2006.01)
*C09K 8/20* (2006.01)    *C08B 30/12* (2006.01)
*C08B 30/14* (2006.01)

(86) Numéro de dépôt international:
**PCT/FR2004/000384**

(87) Numéro de publication internationale:
**WO 2004/076586 (10.09.2004 Gazette 2004/37)**

(54) **UTILISATION D'UN AMIDON DE LEGUMINEUSE SELECTIONNE DANS UN FLUIDE INDUSTRIEL**

VERWENDUNG AUSGEWÄHLTER STÄRKE VON LEGUMINOSEN IN INDUSTRIELLEN FLÜSSIGKEITEN

USE OF A SELECTED LEGUME STARCH IN AN INDUSTRIAL FLUID

(84) Etats contractants désignés:
**AT BE BG CH CY CZ DE DK EE ES FI FR GB GR HU IE IT LI LU MC NL PT RO SE SI SK TR**

(30) Priorité: **24.02.2003 FR 0302223**

(43) Date de publication de la demande:
**23.11.2005 Bulletin 2005/47**

(73) Titulaire: **Roquette Frères**
**62136 Lestrem (FR)**

(72) Inventeurs:
• **MENTINK, Léon**
**F-59100 Roubaix (FR)**
• **GRAUX, Jean-Pierre**
**F-62190 Lillers (FR)**

(74) Mandataire: **Cabinet Plasseraud**
**52, rue de la Victoire**
**75440 Paris Cedex 09 (FR)**

(56) Documents cités:
**EP-A- 0 852 235    EP-A- 1 130 074**
**WO-A-02/12414    US-B1- 6 180 571**

• **N.U.HAASE, W. KEMPF: "Anmerkungen zur Qualität der Erbsenstärke", STARCH/STÄRKE, vol. 41, no. 2, 1989, pages 49-54,**
• **N.U.HAASE, W. KEMPF, G.TEGGE, U.D'HEUR: "Vergleichende Untersuchungen zur Erbsenstärkeisolierung auf nasstechnischem Wege", STARCH/STÄRKE, vol. 39, no. 12, 1987, pages 416-421,**

**Description**

La présente invention a pour objet des amidons de légumineuse sélectionnés par leurs caractéristiques de viscosité et, de solubilité et un fluide industriel comprenant un de ces amidons.

Elle concerne également un procédé de préparation des amidons de légumineuse ainsi sélectionnés.

Elle vise tout particulièrement l'utilisation des amidons de légumineuse ainsi préparés ou sélectionnés comme constituant d'un fluide destiné au domaine des puits de forage.

Par « légumineuse » au sens de la présente invention, on entend toute plante appartenant aux familles des césalpiniacées, des mimosacées ou des papilionacées et notamment toute plante appartenant à la famille des papilionacées comme, par exemple, le pois, le haricot, la fève, la féverolle, la lentille, la luzerne, le trèfle ou le lupin.

Cette définition inclut notamment toutes les plantes décrites dans l'un quelconque des tableaux contenus dans l'article de R. HOOVER et al. intitulé « Composition, Structure, functionality and Chemical modification of legume starches : a review ».

De préférence, la légumineuse est choisie dans le groupe comprenant le pois, le haricot, la fève et la féverolle.

Avantageusement, il s'agit de pois, le terme, « pois » étant ici considéré dans son acception la plus large et incluant en particulier :

-    toutes les variétés sauvages de « pois lisse » (« smooth pea »), et
-    toutes les variétés mutantes de « pois lisse » et de « pois ridé » (« wrinkled pea ») et ce, quelles que soient les utilisations auxquelles on destine généralement lesdites variétés (alimentation humaine, nutrition animale et/ou autres utilisations).

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEDLEY et al. intitulé « Developing novel pea starches » Proceedings of the Symposium of the Industrial Biochemistry and Biotechnology Group of the Biochemical Society, 1996, pp 77-87.

Selon une autre variante avantageuse, la légumineuse est une plante, par exemple une variété de pois ou de féverolle, donnant des graines contenant au moins 25 % en poids (sec/sec) d'amidon.

Par « amidon de légumineuse », on entend toute composition extraite et ce, de quelque manière que ce soit, d'une légumineuse et notamment d'une papilionacée, et dont la teneur en amidon est supérieure à 90 %, de préférence supérieure à 95 %, ces pourcentages étant exprimés en poids sec par rapport aux poids sec de ladite composition.

Avantageusement, cette teneur en amidon est au moins égale à 98 % (sec/sec).

Selon une autre variante, la teneur en protéines de ladite composition est inférieure à 5 %, de préférence inférieure à 2 %, ces pourcentages étant exprimés en poids sec par rapport au poids sec de ladite composition.

Avantageusement, cette teneur en protéines est au plus égale à 1 % (sec/sec), de préférence au plus égale à 0,5 %. Elle peut, par exemple, se situer entre 0,25 et 0,45 %.

La composition utilisable comme « amidon de légumineuse » au sens de la présente invention peut par ailleurs contenir, généralement à une teneur totale inférieure à 5 % (sec/sec), différents autres constituants que amidon et protéines, en particulier des matières grasses, des substances colloïdales, des fibres, des éléments minéraux...

La teneur en amylose de l'amidon contenu dans ladite composition peut se situer dans une large gamme, i.e entre 3 et 80 % et généralement entre 10 et 78 %, ces pourcentages étant exprimés en poids sec par rapport au poids sec d'amidon contenu dans ladite composition.

Selon une première variante, cette teneur en amylose est supérieure à 20 % et inférieure à 60 %, notamment comprise entre 22 et 55 % (sec/sec).

De façon particulièrement avantageuse, cette teneur en amylose est supérieure à 32 % et inférieure à 53 %, notamment comprise entre 33 et 45 % (sec/sec).

L'amidon contenu dans ladite composition peut notamment avoir subi au moins un traitement de modification choisi dans le groupe comprenant les traitements chimiques, les traitements physiques et les traitements enzymatiques.

Les traitements chimiques comprennent en particulier toutes les opérations connues d'estérification, d'éthérification, de réticulation ou d'hydrolyse par voies acide ou oxydante.

Les traitements physiques comprennent en particulier toutes les opérations connues de précuisson, de cuisson, d'extrusion, d'atomisation, ou de séchage, celles connues sous les termes de « Heat Moisture Treatment » ou de « Annealing », les opérations de traitement par micro-ondes ou ultrasons, de plastification ou de granulation.

L'utilisation d'amidons et de dérivés d'amidon issus d'autres plantes que des légumineuses, en particulier issus de la pomme de terre, du maïs ou du blé, comme constituants de fluides industriels est très largement décrite dans la littérature.

Par « fluide industriel », on entend ici tout fluide à usage non alimentaire, non pharmaceutique ou non cosmétologique, ce fluide :

- se présentant généralement sous forme d'une solution, d'une dispersion ou d'une suspension aqueuse, d'une émulsion eau dans huile ou d'une émulsion huile dans eau, et

- présentant avantageusement une ou plusieurs des propriétés suivantes : viscosifiante, lubrifiante, de refroidissement, d'anticorrosion et/ou de protection temporaire.

Il peut s'agir, à titre d'exemples, de fluides industriels utilisés en tant que :

- fluides d'usinage comme décrit dans le brevet EP 649 460 au nom de la Demanderesse,
- bains de trempe des métaux comme décrit dans les brevets FR 2 530 668 et FR 2 671 103 au nom de la Demanderesse,
- compositions de protection temporaire d'objets, en particulier métalliques, comme décrit dans le brevet FR 2 508 051 au nom de la Demanderesse.

Par « fluide industriel » on entend en particulier toute composition utilisable comme fluide pour puits (« Well Servicing Fluid ») au sens des brevets FR 2 516 532 et US 4,392,964.

Cette définition inclut les fluides de forage (« drillings fluids ») ou boues de forage (« drillings muds ») mais aussi les fluides de reconditionnement (« workover fluids »), de finition (« completion fluids »), d'étanchéité (« packer fluids »), de traitement des puits (« well treating fluids »), de traitement des formations souterraines (« subterranean fluids »), d'intervalle (« spacer fluids »), d'abandon de forage (« hole abandonment fluids »).

Les amidons et dérivés issus d'autres plantes que les légumineuses sont largement utilisés dans la préparation de fluides pour puits, notamment de fluides ou boues de forage et ce, depuis plus d'une soixantaine d'années.

Une telle utilisation est exemplifiée, entre autres, dans les brevets FR 1 244 623, FR 2 206 375, EP 0852 235 ou CA 1077699 ou plus récemment dans les brevets US 6,133,203, US 6,281,172, EP 1 130 074, US 6,391,830, ou US 6,180,571.

A la connaissance de la Demanderesse, le seul document exemplifiant véritablement l'utilisation d'un amidon de légumineuse comme constituant d'un fluide industriel, en l'occurrence une boue de forage, consiste en la demande de brevet WO 02/12414 intitulée « Drilling fluid comprising a high-amylose starch ».

Dans ce document, il est préconisé de modifier physiquement, et tout particulièrement par extrusion, l'amidon de légumineuse en vue de son usage dans la boue de forage.

Cependant, aucun détail n'est donné ou ne peut être déduit sur les conditions d'extrusion dudit amidon et donc sur les caractéristiques intrinsèques, notamment de solubilité et de viscosité, de l'amidon extrudé résultant, y compris au niveau du tableau situé en page 9 de ce document et intitulé « Temperature Tolerance Extruded Legume Starch »

Dans ce tableau sont mesurées spécifiquement les caractéristiques (y compris de viscosité FANN) de compositions applicatives de type « boue de forage » à base de NaCl, d'argile et d'amidon extrudé (10 g/l), lesdites caractéristiques étant par ailleurs mesurées à la seule température de 150°C.

De même, il n'est pas précisé et il ne peut être déduit les caractéristiques intrinsèques de l'amidon de légumineuse à 32 % d'amylose (dénommé « Product ») utilisé dans les boues de forage (« Mud compositions I - IV ») décrites en pages 7 et 8 de cette demande.

Par ailleurs, aucune précision n'est donnée quant aux teneurs réelles en amidon, protéines, substances colloïdales, fibres, lipides et autres constituants éventuels, des produits utilisés dans ces exemples.

En outre, les boues de forage exemplifiées dans ce document sont toujours testées dans des conditions de pH que l'on peut juger comme plutôt favorables.

En effet, le pH desdites boues de forage se situe toujours entre 7,8 et 8,3 et donc toujours a une valeur de pH inférieure à 8,5, i.e. dans une gamme de pH relativement peu alcalins en regard de ceux les plus communément envisagés dans cette application.

Ces conditions limitent les possibilités de déstabilisation thermochimique de l'amidon lors de la préparation puis de l'usage de la boue de forage et surévaluent par la même l'efficacité dudit amidon, notamment comme additif viscosifiant et apte à limiter la perte en fluide (« fluid loss ») de ladite boue.

Par ailleurs, la nature très gonflante des argiles (attapulgite, bentonite) mises en oeuvre dans les boues de forage (« Mud compositions I-IV ») décrites en pages 7 et 8 de la demande WO 02/12414 précitée est également apte à en limiter la perte en fluide.

Les articles Starch/Starke 41 (1989) pages 49-54 et Starch/Starke 39 (1987) pages 49-54 sont des publications portant sur l'amidon, plus spécifiquement sur les amidons de pois et font notamment un bilan détaillé des caractéristiques physico-chimiques de ceux-ci.

La Demanderesse a désormais trouvé qu' il était possible, par une sélection appropriée de certaines caractéristiques physico-chimiques d'amidons de légumineuses, d'améliorer avantageusement les possibilités d'usage desdits amidons comme composants de fluides industriels, notamment ceux exploitables dans des conditions de températures élevées et/ou de pH élevés.

Par « températures élevées » on entend ici des températures supérieures à 130°C, de préférence supérieures à 135°C et notamment au moins égales à 140°C, auxquelles sont soumis lesdites fluides industriels lors de leurs utilisations.

Par « pH élevés » on entend ici des pH au moins égaux à 8,5, de préférence compris entre 8,5 et 12 et notamment compris entre 9 et 11,5 en relation avec le pH desdits fluides industriels tels que préparés pour leurs utilisations.

La Demanderesse a en particulier observé, après de longs travaux de recherche et d'analyse, que la sélection des caractéristiques de viscosité Brookfield et de solubilité aqueuse d'un amidon de légumineuse, par exemple d'un amidon de pois, en améliorait avantageusement les possibilités d'usage comme composant de fluides de puits exploitables à la fois à températures élevées et à pH élevés.

Les notions de « amidon de légumineuse » et de « fluide industriel » ont été définies préalablement.

La « viscosité Brookfield » de l'amidon de légumineuse utilisable conformément à l'invention est mesurée classiquement selon les instructions et sur un matériel fournis par BROOKFIELD ENGINEENING LABORATORIES, INC.

Dans le cas présent, cette viscosité est mesurée à 20°C sur une composition aqueuse à 8 % (en sec) dudit amidon qui a été agitée 20 minutes à 1500 tours/minute.

Cette viscosité (ci-après « viscosité Brookfield (8 %, 20°C, 20 min, 1500 tours/minutes »)) peut notamment être mesurée selon le protocole décrit ci-après :

- on détermine la teneur en eau exacte de l'amidon de légumineuse à tester, par exemple à l'aide d'une balance à humidité infra-rouge de type « SARTORIUS MA 30 »,
- on calcule alors la quantité d'eau nécessaire à rajouter à 40 g, exprimés en sec, dudit amidon aux fins d'obtenir une composition aqueuse dont la matière sèche est de 8 %,
- on introduit la quantité ainsi calculée d'eau (eau potable à 20°C) dans un bêcher en inox de 1 l,
- on met cette eau sous agitation (500 tours/min) à l'aide d'un agitateur de laboratoire, par exemple de type « TURBOTEST 33/300 S » muni d'une turbine défloculeuse d'un diamètre de 55 mm, livrée avec ce matériel,
- sous cette agitation, on introduit en quelques secondes les 40 g, exprimés en sec, d'amidon de légumineuse à tester,
- au moment où la totalité dudit amidon est introduit dans l'eau, on déclenche le chronomètre,
- on augmente la vitesse d'agitation à 1500 tours / min et on maintient cette agitation pendant 20 minutes,
- on détermine alors immédiatement la viscosité Brookfield de la composition aqueuse résultante, par exemple sur un dispositif « BROOKFIELD modèle RVF 100 » et en utilisant le mobile de l'appareil qui donne une lecture comprise entre 20 et 80 % de l'échelle du cadran de l'appareil,
- cette valeur est ici retenue comme la viscosité Brookfield (8 %, 20°C, 20 min, 1500 tours/min) de l'amidon de légumineuse testé.

La société Demanderesse a trouvé, après de nombreux travaux de recherche et d'analyse, que des amidons de légumineuses ainsi sélectionnés étaient particulièrement adaptés à un usage comme composants de fluides industriels dans des conditions de températures élevées et/ou de pH élevés et ce, tout en restant suffisamment stables et manipulables lors d'opérations menées à température ambiante (20°C).

Dans le domaine particulier des fluides pour puits, la société Demanderesse a notamment observé que la mise en oeuvre de tels amidons de légumineuses sélectionnés permettaient aux dits fluides :

- d'être utilisables, si on le souhaitait, à des températures au moins égales à 135°C, voire au moins égales à 141°C ou 144°C, températures susceptibles d'être atteintes aux fonds de puits lors de forages profonds,
- d'être utilisables, si on le souhaitait et y compris aux températures précitées, pour des gammes de pH élevés, par exemple des pH compris entre 8,5 et 12,
- d'être utilisables, si on le souhaitait et y compris aux températures et pH précités, dans des environnements très divers, par exemple en termes de salinité du milieu (dont eau salée ou saumure, saturée ou non, eau de mer, éventuellement reconstituée,...),
- de présenter, à température ambiante, de bonnes propriétés physiques, notamment de stabilité et de viscosité,
- de présenter, à température ambiante ou non, de bonnes propriétés applicatives, par exemple une bonne aptitude à la formation de gâteaux de filtration sur les parois des puits.

Par « solubilité aqueuse » on entend ici le pourcentage en poids de matières contenues dans ledit amidon et qui sont solubles dans l'eau distillée à 20°C.

Dans le cas présent, on prélève un échantillon de l'ordre de 5 g d'amidon de légumineuse. On mesure le poids exact (dénommé « P ») dudit échantillon.

Dans un bêcher de 250 ml, on introduit, sous agitation, 200 ml d'eau distillée à 20°C puis la quantité P susmentionnée d'amidon de légumineuse. Après 15 minutes d'agitation, on centrifuge la composition résultante et ce, pendant 10 minutes à 4000 tours / minute et à 20°C.

Après centrifugation, on prélève 25 ml de liquide surnageant que l'on introduit dans un cristallisoir en verre d'un diamètre de 95 mm, préalablement séché et taré.

On place ensuite le cristallisoir dans une étuve aérée dont la température est maintenue à 60°C environ. Après évaporation de l'eau, on met le cristallisoir dans une étuve à circulation d'air réglée à 103°C $\pm$ 2°C pendant 1 heure puis dans un dessiccateur en vue de refroidir l'échantillon jusqu'à la température ambiante.

On pèse ensuite la quantité dénommée « M » d'échantillon contenue dans le cristallisoir.

La solubilité aqueuse de l'amidon de légumineuse testé, exprimée en %, est calculée selon la formule suivante :

$$\text{Solubilité aqueuse (\%)} = \frac{M \times 200 \times 100}{25 \times P}$$

Parmi ces amidons de légumineuses sélectionnés selon le double critère de viscosité et de solubilité aqueuse, il a été trouvé en particulier deux familles de produits particulièrement aptes à être utilisés conformément à l'invention et notamment dans les fluides de puits susmentionnés.

La première famille (ci-après dénommée « FAMILLE 1 ») couvre des amidons de légumineuses présentant simultanément :

- une viscosité Brookfield comprise entre 2 000 et 8 000 mPa.s, et
- une solubilité aqueuse comprise entre 15 et 50 %.

La seconde famille (ci après dénommée « FAMILLE 2 ») consiste en des amidons de légumineuse présentant simultanément :

- une viscosité Brookfield comprise entre 500 et 1 900 mPa.s, et
- une solubilité aqueuse comprise entre 30 et 80 %.

La société Demanderesse considère d'ailleurs que les amidons de légumineuses appartenant aux deux FAMILLES 1 et 2 ainsi sélectionnées constituent de nouveaux produits industriels.

De manière générale, l'amidon de légumineuse utilisable comme composant de fluide industriel conformément à l'invention peut notamment, comme décrit dans l'ensemble de ce qui précède :

- présenter des teneurs variables en amidon, amylose, protéines, matières grasses, fibres, substances colloïdales, éléments minéraux, et
- avoir subi au moins une modification par un traitement chimique ou physique.

En suite de quoi, la présente invention a également pour objet un procédé de préparation d'un amidon de légumineuse modifié utilisable comme constituant d'un fluide industriel, caractérisé par le fait que l'on soumet un amidon de légumineuse à au moins un traitement chimique ou physique, de telle sorte que l'amidon de légumineuse résultant soit conforme à l'une quelconque des gammes de viscosité Brookfield susdécrites et à l'une quelconque des gammes de solubilité aqueuse susdécrites.

Selon une première variante, on soumet un amidon de légumineuse à un traitement physique, en particulier de cuisson ou de précuisson, autre qu'un traitement d'extrusion et notamment à un traitement sur tout dispositif largement connu de l'homme de l'art sous le vocable général de « tambour sécheur »(« drum dryer »), y compris les variantes monocylindre (« single drum ») ou « bicylindre » (« double drum »).

La société Demanderesse a trouvé que les traitements sur tambour sécheur étaient particulièrement bien adaptés à la préparation efficace deux FAMILLES 1 et 2 susmentionnées de nouveaux produits industriels sélectionnés selon le double critère de viscosité et de solubilité aqueuse.

Ces traitements se sont avérés particulièrement adaptés à la préparation d'amidons de légumineuses appartenant à la FAMILLE 1 précitée.

La société Demanderesse a d'autre part observé que les traitements sur tambour permettaient, si on le souhaitait, une telle préparation efficace en mettant en oeuvre, en tant que matières premières, des amidons de légumineuses natifs i.e. n'ayant préalablement subi aucune modification chimique, physique ou enzymatique.

Ceci n'exclut bien évidemment pas que ces traitements sur tambour puissent être réalisés sur des amidons de légumineuses préalablement, simultanément et/ou postérieurement modifiés d'une façon ou d'une autre.

Le traitement sur tambour sécheur peut par exemple être précédé d'un autre traitement, en particulier d'un autre traitement physique tel qu'un passage sur tuyère ou tout autre dispositif de cuisson directe par jet de vapeur ou indirecte permettant la cuisson instantanée d'une suspension d'amidon.

Par ailleurs, la société demanderesse a également observé que les traitements d'extrusion permettaient une telle préparation efficace dès lors que, contrairement aux enseignements de la demande WO 02/12414, cn mettait en oeuvre des amidons de légumineuses qui, préalablement, avaient été chimiquement modifiés, en particulier faiblement réticulés, en tant que matières premières.

En suite de quoi, le procédé de préparation d'un amidon de légumineuse modifié selon la présente invention peut être également caractérisé :

- selon une variante, par le fait que l'on soumet un amidon de légumineuse, natif ou préalablement modifié, a un traitement autre qu'un traitement d'extrusion, en particulier un traitement sur un tambour sécheur,
- selon une autre variante, par le fait que l'on soumet un amidon de légumineuse chimiquement modifié, en particulier réticulé, à un traitement d'extrusion.

Le mérite de la Demanderesse est notamment d'avoir trouvé que non seulement ces deux variantes de procédé étaient particulièrement bien adaptées à la préparation des deux FAMILLES 1 et 2 susmentionnées de nouveaux amidons de légumineuses sélectionnés selon le double critère de viscosité et de solubilité aqueuse, mais encore que lesdits amidons étaient particulièrement performants en tant que composants de fluides industriels présentant des pH élevés, i.e. au moins égaux à 8,5, et/ou exploitables à des températures élevées, i.e. supérieures à 130°C.

En particulier, lesdits amidons de légumineuses ainsi sélectionnés se sont révélés constituer des composants remarquablement efficaces de fluides de puits, notamment de fluides de forage, présentant des pH compris entre 9 et 11,5 tout en étant exploitables à des températures d'au moins 140°C.

Selon une variante de la présente invention on associe, au sein d'un même fluide de puits, au moins un amidon de légumineuse appartenant à la FAMILLE 1 susmentionnée et au moins un amidon de légumineuse appartenant à la FAMILLE 2 susmentionnée.

Il est tout à fait surprenant de constater que lesdits amidons présentent non seulement à température ambiante mais encore à température élevée, les caractéristiques physiques obligatoirement requises pour leur usage comme agents rétenteurs d'eau dans les boues de forage et ce, selon les normes en vigueur, par exemple les normes éditées par l'Américain Petroleum Institute (« API »).

Les amidons de légumineuses ainsi sélectionnés selon l'invention se différencient notamment :

- des amidons issus de pomme de terre, de maïs ou de maïs cireux (« waxy ») qui, pour être efficaces à température élevée, doivent obligatoirement être réticulés à un niveau très élevé, et
- des amidons de maïs riches en amylose qui ne présentent pas, à température ambiante, les caractéristiques physiques requises, notamment en termes de viscosité, de solubilité et de conformité au test API.

Selon une variante de la présente invention, on peut cependant associer, au sein du même fluide industriel, par exemple au sein du même fluide de puits :

- au moins un amidon de légumineuse utilisable conformément à l'invention, appartenant à l'une ou l'autre des FAMILLES 1 et 2 susmentionnées, et
- au moins un amidon non issu de légumineuse, de préférence un amidon de maïs et tout particulièrement un amidon de maïs présentant une teneur en amylose supérieure à 45 %, notamment comprise entre 46 et 75 %.

Ledit amidon non issu de légumineuse peut avantageusement présenter une teneur en amylose comprise entre 46 et 60 % environ. Il peut être natif ou avoir subi au moins une modification physique et/ou chimique, ladite modification pouvant avoir été opérée simultanément ou non à l'éventuelle modification ayant pu être subie par l'amidon de légumineuse mis en oeuvre conformément à la présente invention.

L'invention pourra être mieux comprise à l'aide des exemples qui suivent et qui font état de certains modes avantageux de préparation des amidons de légumineuses selon l'invention et de leurs utilisations dans le domaine général des fluides industriels.

## PROTOCOLES D'EVALUATION POUR LE DOMAINE DES FLUIDES DE FORAGE AQUEUX

On décrit ci-après les méthodes d'évaluation d'amidons, conformes ou non à l'invention, comme composants potentiels de fluides de forage aqueux (« water - base drilling fluids »), en particulier comme agents de rétention (« filtrate reducing agents »).

Cette méthode consiste à évaluer les propriétés physiques desdits amidons conformément à la norme API 13 A (« API SPECIFICATION 13A - FIFTEENTH EDITION, MAY 1993 ») et plus précisément selon la « section 11 - STARCH » en pages 33-35 de ladite norme.

### 1) PROTOCOLE GENERAL

A partir d'un amidon donné, on prépare et on évalue des fluides de forage respectivement :

- à base d'eau salée à 40 g/l de Nacl (« 40 g/l SALT WATER »), fluides dont on mesure la viscosité V à 600 t/min et on calcule le volume de filtration F selon les paragraphes 11.3 et 11.4 de ladite norme, et
- à base d'eau salée saturée (« SATURATED SALT WATER »), fluides dont on mesure la viscosité V' à 600 t/min et on calcule le volume de filtration F' selon les paragraphes 11.5 et 11.6 de ladite norme.

L'argile utilisée pour cette évaluation est une argile de base peu gonflante, conforme au standard API (« API STANDARD EVALUATION BASE CLAY »), en l'occurrence de type « HYMOD PRIMA » de DOWELL - SCHLUMBERGER.

On compare ensuite les valeurs obtenues de V, F, V' et F' aux valeurs maximum indiquées au niveau du tableau 11.1 « STARCH PHYSICAL REQUIREMENTS » en page 33 de ladite norme.

Selon ledit tableau, les valeurs maximum pouvant être atteintes pour qu'un produit soit considéré comme acceptable dans l'application visée, sont les suivantes :

- V = 18
- V' = 20
- F = 10 cm$^3$, et
- F' = 10 cm$^3$

Par souci de simplification, on considère par la suite qu'un amidon donné présente des caractéristiques physiques satisfaisantes dès lors que l'ensemble des valeurs V, F, V' et F' sont au plus égales aux valeurs précitées (respectivement 18, 20, 10 cm3 et 10 cm3).

Par convention, un tel amidon est affublé du signe « + ».

Inversement, on considère qu'un amidon ne présente pas des caractéristiques physiques (totalement) satisfaisantes dès lors que l'une au moins des valeurs V, F, V' et F' (a fortiori l'ensemble des valeurs V, F, V' et F') est supérieure à la valeur maximum correspondante précitée.

Par convention, un tel amidon est affublé du signe «-».

Le PROTOCOLE GENERAL décrit précédemment étudie le comportement d'un amidon donné sans que celui-ci n'ait subi, après sa préparation, de post traitement thermique ou physique particulier.

En suite de quoi, le PROTOCOLE GENERAL est ici considéré comme effectué « à température ambiante » ou plus précisément, à « basse température / basse pression » et pourra être désigné ci-après « LTLPT » (pour « Low Température / Low Pressure Test »)

### 2) PROTOCOLE PARTICULIER

La société Demanderesse a par ailleurs étudié le comportement d'un certain nombre d'amidons selon le PROTOCOLE GENERAL susdécrit mais après que ces amidons aient subi, au sein d'un fluide de forage, un traitement qui va être décrit ci-après et qui, par convention, sera désigné « HTHPT » (pour « High-Temperature / High - pressure Test »).

En vue de ce test « HTHPT », on prépare une eau de mer « synthétique » de composition suivante :

- Eau déminéralisée 960,00 g
- Na Cl 25,60 g
- Mg Cl$_2$ 6H$_2$0 5,13 g
- Mg SO$_4$ 7H$_2$0 3,30 g
- K Cl 0,73 g
- Na H CO$_3$ 0,20 g
- Na Br 0,20 g
- Ca Cl$_2$2H$_2$O 1,45 g

On mélange ensuite, pendant 30 minutes à 500 t/min, 350 ml de l'eau de mer « synthétique » ainsi préparée et 35 g d'argile « HYMOD PRIMA ».

On ajuste ensuite le pH de cette composition à une valeur de 10 avec de la soude à 400 g/l.

On mélange ensuite 350 ml de cette composition avec 5 g de l'amidon à tester et ce, pendant 20 minutes à 11 000 t/min dans un mélangeur de type « HAMILTON BEACH ».

On verse la boue obtenue dans une cellule en inox jusqu'à atteindre un niveau situé à 1 cm en dessous du bord supérieur de ladite cellule.

On met la cellule contenant la boue sous pression d'azote (100 psi, soit environ 6,9 bars ou 690 kilo pascals) et on la place dans un four de type « roller oven » pendant 16 heures à la température souhaitée.

Après refroidissement de la cellule à 20°C, on verse son contenu dans le bol HAMILTON et on mélange pendant 5 minutes à 11 000 t/min.

On détermine alors directement les valeurs de V, F, V' et F' selon le PROTOCOLE GENERAL susdécrit.

On compare ensuite, comme dans le PROTOCOLE GENERAL, lesdites valeurs aux valeurs maximum précitées (18, 20, 10 cm$^3$ et 10 cm$^3$).

Pour une température envisagée selon le test « HTHPT », chaque amidon testé est affublé du signe « + » ou du signe « - » selon les mêmes conventions que celles établies précédemment, à savoir que l'amidon est considéré comme satisfaisant (« + ») uniquement si l'ensemble des valeurs V, F, V' et F' sont au plus égales aux valeurs maximum précitées.

Un amidon qui est affublé du signe « - » à une certaine température n'est pas testé à une quelconque température supérieure.

## EXEMPLE 1

Dans cet exemple, on évalue un certain nombre d'amidons, conformes ou non à l'invention, selon le PROTOCOLE GENERAL susdécrit.

La liste ci-dessous reprend, pour chaque produit, sa dénomination et ses caractéristiques dont :

- la nature de tout traitement chimique et/ou physique éventuel mis en oeuvre en vue de préparer ledit produit,
- la viscosité Brookfield (8 %, 20°C, 20 min, 1500 t/min) dudit produit telle que définie précédemment (ci après « VB »),
- la solubilité aqueuse dudit produit telle que définie précédemment (ci-après « SA »).

## LISTE DES AMIDONS TESTES

- POIS 1 = amidon de pois natif (teneur en amidon >98 %, teneur en amylose : 38 % environ, teneur en protéines : 0,20 % environ) - VB < 5 mPa.s, SA = 0 %.
- POIS 2 = amidon de pois natif (amidon < 98 %, amylose : 35 % environ, protéines : 0,50 % environ) - VB < 5 mPa.s, SA = 1,1 %.
- POIS 3 = amidon de pois natif (amidon > 98 %, amylose : 35 % environ, protéines : 0,35 % environ) - VB < 5 mPa.s, SA = 0 %.
- POIS 4 = POIS 1 traité sur tambour sécheur - VB = 4550 mPa.s ; SA = 25,5 %.
- POIS 5 = POIS 1 traité sur tambour sécheur - VB = 2300 mPa.s ; SA = 16,2 %.
- POIS 6 = POIS 1 traité sur tuyère puis sur tambour sécheur - VB = 6450 mPa.s ; SA = 43,5 %.
- POIS 7 = POIS 1 traité sur extrudeuse bivis - VB = 220 mPa.s ; SA = 67,6 %.
- POIS 8 = POIS 2 traité sur tambour sécheur - VB = 4300 mPa.s ; SA = 19,7 %.
- POIS 9 = POIS 2 traité sur tuyère puis tambour sécheur - VB = 7500 mPa.s ; SA = 36 %.
- POIS 10 = POIS 3 traité sur extrudeuse bivis - VB = 250 mPa.s ; SA = 64,8 %,
- POIS 11 = POIS 3 traité sur extrudeuse bivis - VB = 420 mPa.s ; SA = 62,7 %.
- POIS 12 = POIS 1 réticulé avec 0,1 % en poids (sec/sec) d'épichlorhydrine - VB < 5 mPa.s ; SA = 0 %.
- POIS 13 = POIS 12 traité sur extrudeuse bivis - VB = 95 mPa.s ; SA = 31 %.
- POIS 14 = POIS 1 réticulé avec 0,05 % d'épichlorhydrine puis traité sur extrudeuse bivis dans les mêmes conditions que POIS 13 - VB = 1640 mPa.s , SA = 80 %.
- AMIDON A = fécule de pomme de terre traitée sur extrudeuse bivis - VB = 110 mPa.s ; SA = 85 %.
- AMIDON B = fécule de pomme de terre réticulée avec 0,1 % d'épichlorhydrine puis traitée sur extrudeuse bivis - VB = 880 mPa.s ; SA 20 %.
- AMIDON C = amidon de maïs réticulé avec 0,1 % d'épichlorhydrine puis traité sur extrudeuse bivis - VB = 54 mPa.s ; SA = 4 %.
- AMIDON D = amidon de mais riche en amylose (EURYLON® 7) acétylé puis traité sur tambour sécheur - VB = 1640 mPa.s ; SA = 37 %.

Le tableau ci-dessous indique pour chaque amidon testé, ses caractéristiques de viscosité Brookfield (« VB ») et de solubilité aqueuse (« SA ») ainsi que sa conformité (notée « + ») ou sa non-conformité (notée « - ») à l'ensemble des quatre conditions concernant les valeurs de V, F, V' et F' étudiées selon le PROTOCOLE GENERAL, i.e globalement sa conformité ou non au test « LTLPT ».

| PRODUIT | VB (mPa.s) | SA % | TEST LTLPT |
|---------|-----------|------|------------|
| POIS 1 | < 5 | 0 | - |
| POIS 2 | < 5 | 1,1 | - |
| POIS 3 | < 5 | 0 | - |
| POIS 4 | 4550 | 25,5 | + |
| POIS 5 | 2300 | 16,2 | + |
| POIS 6 | 6450 | 43,5 | + |
| POIS 7 | 220 | 67,6 | + |
| POIS 8 | 4300 | 19,7 | + |
| POIS 9 | 7500 | 36 | + |
| POIS 10 | 250 | 64,8 | + |
| POIS 11 | 420 | 62,7 | + |
| POIS 12 | < 5 | 0 | - |
| POIS 13 | 95 | 31 | - |
| POIS 14 | 1640 | 80 | + |
| AMIDON A | 110 | 86 | + |
| AMIDON B | 880 | 20 | + |
| AMIDON C | 54 | 4 | - |
| AMIDON D | 1640 | 37 | - |

Ce tableau montre que parmi les amidons de pois ici étudiés, seuls ceux préparés dans des conditions telles que leur viscosité Brookfield soit au moins égale à 100 mPa.s environ sont susceptibles d'être conformes au test « LTLPT », i.e. de présenter l'ensemble des caractéristiques physiques requises pour leur usage en tant qu'agents de rétention selon la norme API 13 A précitée.

Cela exclut les produits natifs (POIS 1 à 3) mais également, en particulier, les amidons de pois qui, bien que traités chimiquement (POIS 12) ou thermiquement (POIS 13), présentent une viscosité Brookfield inférieure à 100 mPa.s. Le fait que le POIS 13 ne soit pas conforme au test « LTLPT » alors que le POIS 14 est conforme au dit test, montre que le taux d'agent de réticulation mis en oeuvre doit être adapté, i.e. généralement être limité, pour que le produit ainsi réticulé puis traité thermiquement sur extrudeuse, puisse satisfaire à cette exigence.

Par ailleurs, la société Demanderesse a observé qu'un amidon de pois présentant une viscosité Brookfield supérieure à 20 000 mPa.s, quel que soit son mode de préparation, avait tendance à former rapidement un gel en solution aqueuse et/ou à être difficilement manipulable.

Le tableau ci-dessus montre également qu'un amidon de mais riche en amylose comme l'AMIDON D (teneur en amylose : 70 % environ) ne satisfait pas au test « LTLPT » et ce, bien que présentant une viscosité Brookfield comprise entre 100 et 20 000 mPa.s.

Inversement, une fécule de pomme de terre comme l'AMIDON A satisfait au test « LTLPT » et ce, bien que présentant une viscosité Brookfield inférieure à 100 mPa.s.

Le tableau ci-dessus montre que les amidons de pois satisfaisant au test « LTLPT » peuvent présenter indépendamment des solubilités aqueuses très variées, notamment comprises entre 10 et 85 %.

Cette gamme exclut notamment les amidons de pois natifs comme les POIS 1, 2 et 3 (solubilité aqueuse égale ou proche de zéro), ou très fortement modifiés comme les POIS 12 et 13 et considérés comme non satisfaisants du fait de leur faible pouvoir fixateur ou rétenteur d'eau.

**EXEMPLE 2**

Dans cet exemple, on évalue un certain nombre d'amidons, conformes ou non à l'invention, selon le PROTOCOLE PARTICULIER susdécrit (test « HTHPT »).

Le test « HTHPT » est d'abord effectué à 130°C puis à 135, 139, 141, 143 et 144°C étant entendu qu'un amidon ne satisfaisant pas au test « HTHPT » à une certaine température (par ex à 141°C) est, pour cette température, affublé du signe « - » selon la convention préétablie et n'est pas testé à une quelconque température supérieure (par ex à 143 ou 144°C).

Le tableau ci-dessous indique, pour chaque amidon testé et chaque température testée, si ledit amidon est conforme (« + ») ou non conforme(« - ») au test « HTHPT », i.e. vérifie ou non globalement l'ensemble des quatre conditions susmentionnées concernant les valeurs de V, F, V' et F'.

| PRODUIT | CONFORMITE OU NON AU TEST HTLPT | | | | | |
|---|---|---|---|---|---|---|
| | 130°C | 135°C | 139°C | 141°C | 143°C | 144°C |
| POIS 1 | + | + | - | - | - | - |
| POIS 2 | + | + | - | - | - | - |
| POIS 3 | + | + | - | - | - | - |
| POIS 4 | + | + | + | + | + | - |
| POIS 5 | + | + | + | + | + | + |
| POIS 6 | + | + | + | + | - | - |
| POIS 7 | + | + | - | - | - | - |
| POIS 8 | + | + | + | + | + | + |
| POIS 9 | + | + | + | + | - | - |
| POIS 10 | + | + | - | - | - | - |
| POIS 11 | + | + | - | - | - | - |
| POIS 12 | + | + | - | - | - | - |
| POIS 13 | + | - | - | - | - | - |
| POIS 14 | + | + | + | + | - | - |
| AMIDON A | + | - | - | - | - | - |
| AMIDON B | + | + | - | - | - | - |
| AMIDON C | + | + | - | - | - | - |
| AMIDON D | + | + | - | - | - | - |

Ce tableau montre que l'ensemble des amidons de légumineuses conformes à l'invention, à savoir les pois 4 à 11 et 14, non seulement vérifient le test « LTLPT » (cf. EXEMPLE 1) mais encore peuvent être utilisés à température élevée, i.e. à au moins 135°C selon le test « HTHPT ».
Ce n'est pas le cas :

- des POIS 1 à 3, amidons de pois natifs qui ne vérifient pas le test « LTLPT » (cf. EXEMPLE 1).
- des POIS 12 et 13, amidons de pois réticulés avec 0,1 % d'épichlorhydrine qui ne vérifient pas simultanément le test « LTLPT » (cf. EXEMPLE 1) et le test « HTHPT » à 135 °C.
- de l'AMIDON A, fécule de pomme de terre extrudée qui n'est pas exploitable à 135°C selon le test « HTHPT ».
- Des AMIDONS C et D, amidons de maïs modifiés chimiquement et thermiquement qui ne vérifient pas le test « LTLPT » (cf. EXEMPLE 1).

L'ensemble des amidons de légumineuses selon l'invention sont au moins aussi performants que l'AMIDON B, fécule de pomme de terre réticulée avec 0,1 % d'épichlorhydrine et traitée thermiquement en vue de sa préparation. C'est notamment le cas des POIS 7, 10 et 11 qui pourtant n'ont subi aucune modification chimique, en particulier de réticulation, avant d'être traités thermiquement en vue de leur préparation.

Il convient cependant de souligner que les POIS 4, 5, 6, 8 et 9 (appartenant à la FAMILLE 1 susmentionnée) et le POIS 14 (appartenant à la famille 2 susmentionnée), conformes à l'invention, lesquels présentent simultanément :

- une viscosité Brookfield comprise entre 1 000 et 10 000 mPa.s, et
- une solubilité aqueuse comprise entre 12 et 80 %, sont encore plus performants puisqu'ils sont exploitables à 141°C, voire à 143 ou 144°C selon le test « HTHPT ».

Et il est remarquable de souligner que de tels amidons de légumineuses ainsi sélectionnés sont aptes à être utilisés efficacement comme composants de fluides de forage sans qu'il y ait un impérieux besoin de les modifier chimiquement, en particulier de les réticuler.

Ceci est d'autant plus surprenant que la littérature enseigne, pour les amidons en général, la nécessité d'une réticulation poussée (en particulier à l'aide d'épichlorhydrine) pour être véritablement exploitables à températures élevées.

**Revendications**

1. Amidon de légumineuse **caractérisé en ce qu'**il présente :

   - une viscosité Brookfield comprise entre 2 000 et 8 000 mPa.s, et
   - une solubilité aqueuse comprise entre 15 et 50 %.

2. Amidon de légumineuse **caractérisé en ce qu'**il présente :

   - une viscosité Brookfield comprise entre 500 et 1 900 mPa.s, et
   - une solubilité aqueuse comprise entre 30 et 80 %.

3. Procédé de préparation d'un amidon de légumineuse selon la revendication 1 ou 2, **caractérisé par le fait qu'**on soumet un amidon de légumineuse natif ou préalablement modifié à un traitement sur tambour sécheur ou un amidon de légumineuse chimiquement modifié, en particulier réticulé, à un traitement d'extrusion.

4. Fluide industriel comprenant un amidon de légumineuse selon la revendication 1 ou 2, le fluide industriel étant choisi dans le groupe constitué des fluides pour puits, des fluides d'usinage, des bains de trempe des métaux et des compositions de protection temporaire d'objets, en particulier métalliques.

5. Fluide industriel selon la revendication 4, **caractérisé en ce que** le fluide industriel présente un pH supérieur à 8,5.

6. Fluide industriel selon la revendication 4 ou 5, **caractérisé en ce que** le fluide industriel est destiné à être exploité à une température supérieure à 130°C.

7. Fluide industriel selon l'une quelconque des revendications 4 à 6, **caractérisé en ce que** le fluide industriel est un fluide pour puits.

8. Fluide industriel selon la revendication 7, **caractérisé en ce que** le fluide pour puits :

   - présente un pH compris entre 8,5 et 12, notamment compris entre 9 et 11,5, et
   - est destiné à être exploité à une température supérieure à 135°C, notamment au moins égale à 140°C.

9. Fluide industriel selon la revendication 7, **caractérisé en ce qu'**il s'agit d'un fluide de forage aqueux.

10. Utilisation d'un amidon de légumineuse selon la revendication 1 ou 2, comme constituant d'un fluide industriel selon l'une quelconque des revendications 4 à 9.

**Claims**

1. A legume starch which exhibits:

- a Brookfield viscosity of between 2000 and 8 000 mPa.s.
- a solubility in water of between 15 and 50%.

2. A legume starch which exhibits:

   - a Brookfield viscosity of between 500 and 1900 mPa.s.
   - a solubility in water of between 30 and 80%.

3. A process for preparing a legume starch according to claim 1 or 2 comprising the step of subjecting a native or previously modified legume starch to a drum dryer, or a chemically modified legume starch to an extrusion treatment.

4. An industrial fluid comprising a legume starch according to claim 1 or 2, wherein said industrial fluid is selected from the group of fluids for wells, machining fluids, baths for tempering metals and compositions for temporarily protecting objects, in particular metallic objects.

5. The industrial fluid as claimed in claim 4, wherein said industrial fluid exhibits a pH higher than 8.5.

6. The industrial fluid as claimed in claim 4 or 5, wherein said industrial fluid is intended to be used at a temperature higher than 130°C.

7. The industrial fluid as claimed in any one of claims 4 to 6, wherein said industrial fluid is a fluid for wells.

8. The industrial fluid as claimed in claim 7, wherein said fluid for wells exhibits a pH of between 8.5 and 12, preferably of between 9 and 11.5, and is intended to be used at a temperature higher than 135 °C, preferably higher than 140 °C.

9. The industrial fluid as claimed in claim 7, wherein said fluid is an aqueous drilling fluid.

10. Use of a legume starch according to claim 1 or 2 as a constituent of an industrial fluid according to any one of claims 4 to 9.


**Patentansprüche**

1. Hülsenfruchtstärke, **dadurch gekennzeichnet, dass** sie aufweist:

   - eine Brookfield-Viskosität, umfassend zwischen 2000 und 8000 mPa·s, und
   - eine Wasserlöslichkeit, umfassend zwischen 15 und 50 %.

2. Hülsenfruchtstärke, **dadurch gekennzeichnet, dass** sie aufweist:

   - eine Brookfield-Viskosität, umfassend zwischen 500 und 1900 mPa·s, und
   - eine Wasserlöslichkeit, umfassend zwischen 30 und 80 %.

3. Verfahren zur Herstellung einer Hülsenfruchtstärke nach Anspruch 1 oder 2, **dadurch gekennzeichnet, dass** eine native oder vorab durch Behandlung in einer Trockentrommel modifizierte Hülsenfruchtstärke oder eine chemisch modifizierte, insbesondere vernetzte, Hülsenfruchtstärke einer Extrusionsbehandlung unterzogen wird.

4. Industrielles Fluid, umfassend eine Hülsenfruchtstärke nach Anspruch 1 oder 2, wobei das industrielle Fluid ausgewählt ist aus der Gruppe, bestehend aus Bohrlochfluiden, Bearbeitungsfluiden, Metallhärtungsbädern und Zusammensetzungen für temporären Schutz von Gegenständen, insbesondere metallischen Gegenständen.

5. Industrielles Fluid nach Anspruch 4, **dadurch gekennzeichnet, dass** das industrielle Fluid einen pH-Wert über 8,5 aufweist.

6. Industrielles Fluid nach Anspruch 4 oder 5, **dadurch gekennzeichnet, dass** das industrielle Fluid für eine Verwendung bei einer Temperatur über 130 °C vorgesehen ist.

7. Industrielles Fluid nach einem der Ansprüche 4 bis 6, **dadurch gekennzeichnet, dass** das industrielle Fluid ein Fluid für Bohrlöcher ist.

8. Industrielles Fluid nach Anspruch 7, **dadurch gekennzeichnet, dass** das Fluid für Bohrlöcher:

   - einen pH-Wert zwischen 8,5 und 12, insbesondere zwischen 9 und 11,5, umfasst und
   - für eine Verwendung bei einer Temperatur über 135 °C, insbesondere mindestens gleich 140 °C, vorgesehen ist.

9. Industrielles Fluid nach Anspruch 7, **dadurch gekennzeichnet, dass** es sich um ein Fluid für wässrige Bohrung handelt.

10. Verwendung einer Hülsenfruchtstärke nach Anspruch 1 oder 2 als Bestandteil eines industriellen Fluids nach einem der Ansprüche 4 bis 9.

## RÉFÉRENCES CITÉES DANS LA DESCRIPTION

**Documents brevets cités dans la description**

- EP 649460 A
- FR 2530668
- FR 2671103
- FR 2508051
- FR 2516532
- US 4392964 A
- FR 1244623
- FR 2206375
- EP 0852235 A
- CA 1077699
- US 6133203 A
- US 6281172 B
- EP 1130074 A
- US 6391830 B
- US 6180571 B
- WO 0212414 A

**Littérature non-brevet citée dans la description**

- **R. HOOVER et al.** *Composition, Structure, functionality and Chemical modification of legume starches : a review*
- **C-L HEDLEY et al.** Developing novel pea starches. *Proceedings of the Symposium of the Industrial Biochemistry and Biotechnology Group of the Biochemical Society,* 1996, 77-87
- *Starch/Starke,* 1989, vol. 41, 49-54
- *Starch/Starke,* 1987, vol. 39, 49-54
- API SPECIFICATION 13A. STARCH. Mai 1993, 33-35
- **OWELL - SCHLUMBERGER.** API STANDARD EVALUATION BASE CLAY. *HYMOD PRIMA*